(19) Europäisches Patentamt
European Patent Office
Office européen des brevets

(11) Numéro de publication: **0 501 227 B1**

(12) # FASCICULE DE BREVET EUROPEEN

(45) Date de publication du fascicule du brevet: **06.12.95**

(51) Int. Cl.$^6$: **C08L 9/06**, C08K 3/36, C08J 3/20, B60C 1/00

(21) Numéro de dépôt: **92102313.1**

(22) Date de dépôt: **12.02.92**

(54) **Composition de caoutchouc et enveloppes de pneumatiques à base de ladite composition.**

(30) Priorité: **25.02.91 FR 9102433**

(43) Date de publication de la demande:
**02.09.92 Bulletin 92/36**

(45) Mention de la délivrance du brevet:
**06.12.95 Bulletin 95/49**

(84) Etats contractants désignés:
**AT BE DE ES FR GB IT LU NL SE**

(56) Documents cités:
**EP-A- 0 157 703**
**EP-A- 0 217 701**
**EP-A- 0 299 074**
**FR-A- 2 220 539**

(73) Titulaire: **COMPAGNIE GENERALE DES ETABLISSEMENTS MICHELIN - MICHELIN & CIE**
**12, Cours Sablon**
**F-63040 Clermont-Ferrand Cédex (FR)**

(72) Inventeur: **Rauline, Roland**
**32, la Garenne Haute**
**F-63830 Durtol (FR)**

(74) Mandataire: **Hiebel, Robert et al**
**MICHELIN & CIE - Service K. Brevets**
**23, Place des Carmes**
**F-63040 Clermont-Ferrand Cedex (FR)**

**EP 0 501 227 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet une composition de caoutchouc à base d'un copolymère de diène conjugué et d'un composé vinyle aromatique vulcanisable au soufre comportant de préférence à titre de charge majoritaire de la silice, utilisable pour la fabrication d'enveloppes de pneumatiques performantes en toutes saisons, et le procéde de fabrication d'une telle composition de caoutchouc.

Depuis que les économies de carburant et la lutte contre les nuisances créées par les véhicules à moteur sont devenues une priorité, l'objectif des concepteurs de pneumatiques est de réaliser un pneumatique possèdant à la fois une très faible résistance au roulement, une excellente adhérence tant sur sol sec que sur sol humide et enneigé, une très bonne résistance à l'usure et enfin un bruit de roulement réduit.

De nombreuses solutions ont été proposées pour diminuer la résistance au roulement des pneus notamment en modifiant les compositions de caoutchouc utilisées au niveau des bandes de roulement des pneus. Ainsi pour les compositions de caoutchouc renforcées à l'aide de noir de carbone, il a été proposé dans un premier temps de réduire le taux de noir de carbone. Puis il a été proposé comme dans le brevet US-A-4 822 844 d'utiliser un noir de carbone possèdant des caractéristiques précises exprimées par une surface spécifique d'absorption de l'iode (IA) et d'azote ($N_2SA$) ainsi que par une taille moyenne des particules de noir bien définies. Une autre solution décrite dans le brevet US-A-4 866 131 proposait d'utiliser comme composition de bande de roulement un copolymère de butadiène et de styrène préparé en solution et de faible masse moléculaire en mélange avec un autre copolymère conventionnel préparé en solution ou en émulsion. Enfin, il a été proposé dans le brevet US 4 894 420 d'utiliser une bande de roulement constituée d'un coupage de cis 1,4-polyisoprène et d'un copolymère diène/acrylonitrile. Cependant aucune des solutions proposées jusqu'ici ne s'est avérée satisfaisante car l'amélioration de la résistance au roulement s'accompagne d'une déchéance d'une ou plusieurs propriétés essentielles telles qu'une réduction de l'adhérence sur sol humide et/ou enneigé, une réduction de la résistance à l'usure et en outre toutes ces solutions sont toujours entièrement dépendantes du pétrole. Il a également été proposé d'utiliser à titre de charges renforçantes des charges blanches, telles que la silice, la bentonite, l'argile, l'oxyde de titane, du talc, etc.. qui présentent l'avantage de ne pas être tirées du pétrole et de diminuer la résistance au roulement des pneus ayant une bande de roulement comportant de telles charges. Cependant, l'utilisation de silice dans des compositions pour bandes de roulement est toujours restée exceptionnelle et ne représentait souvent qu'une fraction minoritaire de la charge totale comme décrit dans les brevets US-A-4 894 420 et US-A-4 820 751 en raison de la déchéance des propriétés occasionnée notamment déchéance de la résistance à l'usure. Pour remédier à cette situation, il a été proposé dans la demande de brevet européen EP-A-299 074 une composition de caoutchouc comprenant de la silice à titre de charge renforçante dans des proportions très larges et qui est à base d'un polymère fonctionnalisé à l'aide d'un composé alcoxyle silane bien particulier ayant un groupe alcoxyle non hydrolysable. Toutefois, cette solution est restrictive en ce qu'elle ne permet l'utilisation que d'une famille très précise de silanes, ce qui constitue un handicap au niveau d'une exploitation industrielle.

Il a été découvert de manière surprenante et inattendue que la mise en oeuvre d'un copolymère de diène conjugué avec un composé vinyle aromatique préparé en solution avec une silice particulière, connue en soi, réalisée de façon à obtenir une excellente dispersion de la silice dans la matrice élastomérique permet d'obtenir une composition de caoutchouc utilisable comme bande de roulement de pneumatiques possèdant toutes les propriétés avantageuses connues procurées par la silice et toutes celles habituellement atteintes grâce à l'emploi du noir de carbone.

La présente invention a pour objet une composition de caoutchouc vulcanisable au soufre à base d'un copolymère de diène conjugué et d'un composé vinyle aromatique comportant de la silice à titre de charge renforçante, caractérisée en ce qu'un copolymère d'un diène conjugué et d'un composé vinyle aromatique préparé par polymérisation en solution dans un solvant hydrocarboné et ayant une teneur globale en composé vinyle aromatique comprise entre 5 % et 50 % en poids, et une température de transition vitreuse comprise entre 0 °C et -80 °C mesurée par ATD et 30 à 150 parties en poids pour 100 parties en poids de caoutchouc d'une charge constituée d'une silice possèdant une surface BET comprise entre 100 et 250 $m^2/g$, une surface CTAB comprise entre 100 et 250 $m^2/g$, une prise d'huile mesurée en DBP comprise entre 150 et 250 ml/100 g et une aire projetée moyenne des agrégats supérieure à 8500 $nm^2$ avant mine en oeuvre et comprise entre 7000 et 8400 $nm^2$ après mélangeage thermo-mécanique ainsi que les additifs conventionnellement utilisés dans des compositions caoutchouteuses à l'exception du système de vulcanisation sont soumis à un travail mécanique comportant au moins une étape thermique atteignant une température maximale comprise entre 130 °C et 180 °C et de préférence supérieure à 145 °C pendant une durée appropriée qui est fonction de la température choisie pour le travail mécanique, de la nature des

constituants et du volume soumis audit travail thermo-mécanique, puis sont soumis à une étape de finition consistant à ajouter le système de vulcanisation soufré par travail mécanique à une température inférieure à la température de vulcanisation et préférentiellement à une température inférieure à 100 °C.

La composition de caoutchouc conforme à l'invention est particulièrement adaptée pour la fabrication de bandes de roulement de pneumatiques destinées en particulier à équiper des véhicules de tourisme, des véhicules légers tous terrains 4x4, des camionnettes, des motos. Les bandes de roulement comportant la composition conforme à l'invention peuvent être utilisées lors de la fabrication de pneus ou pour le rechapage de pneus usés.

La composition de caoutchouc conforme à l'invention confère à une bande de roulement d'un véhicule à moteur un excellent compromis entre des propriétés contradictoires, c'est-à-dire confère simultanément une très faible résistance au roulement, une adhérence améliorée sur sol humide, une adhérence améliorée sur sol enneigé, une très bonne résistance à l'usure qui est sensiblement égale à celle obtenue avec du noir de carbone, une moindre déformation des reliefs (blocs ou nervures) de gomme par vieillissement dû au roulage et cela tout en réduisant le bruit émis par le pneu au cours du roulage.

L'obtention d'un tel niveau de compromis est tout à fait surprenant et inattendu pour l'homme de l'art qui sait que l'utilisation de silice entraîne normalement une déchéance importante de la résistance à l'usure, que l'utilisation d'un copolymère butadiène-styrène préparé en solution peut entraîner une déchéance de la résistance à l'usure et qui s'attend donc à obtenir une résistance à l'usure catastrophique alors qu'il n'en est rien puisqu'elle est substantiellement égale à celle d'une composition renfermant du noir de carbone comme charge renforçante.

Ce caractère inattendu et imprévisible provient également du fait qu'il est généralement admis par l'homme de l'art, d'une part qu'une faible résistance au roulement est antinomique avec une très bonne adhérence sur sol humide, d'autre part qu'une bonne adhérence sur sol humide est antinomique avec une bonne adhérence sur sol enneigé alors que la composition conforme à l'invention permet d'obtenir un excellent compromis résistance au roulement réduite, très bonne adhérence sur sol humide et très bonne adhérence sur sol enneigé. En outre, la composition conforme à l'invention permet de réduire le bruit émis par la bande de roulement lors du roulage du pneu.

Pour obtenir une composition conforme à l'invention possèdant l'ensemble de ces propriétés, il faut utiliser un copolymère d'un diène conjugué avec un composé vinyle aromatique préparé de manière connue en soi en solution dans un solvant hydrocarboné en présence d'un initiateur d'un composé métallique alcalin ou alcalino-terreux, comme décrit par exemple dans le brevet français FR-A-2 295 972. Ce copolymère peut être utilisé seul ou en coupage avec au moins un autre élastomère diénique, notamment du polyisoprène, du caoutchouc naturel, du polybutadiène. De manière préférentielle, l'élastomère utilisé en coupage est du polybutadiène ayant plus de 90 % de liaisons cis 1,4 obtenu par les procédés connus de catalyse à l'aide de métaux de transition comme décrit par exemple dans le brevet français FR-A-1 436 607. Cet autre élastomère diénique peut être présent en proportions variables par rapport au copolymère préparé en solution et à titre préférentiel jusqu'à 70 parties en poids.

A titre de diène conjugué conviennent notamment le butadiène-1,3, l'isoprène, le 2,3-dimethyl-1,3-butadiène. A titre de composé vinyle aromatique conviennent notamment le styrène, l'ortho-, méta-, para-methylstyrène ou le mélange commercial "vinyle-toluène".

Le copolymère de diène conjugué et de composé vinyle aromatique préparé en solution doit avoir une teneur globale en styrène comprise entre 5 et 50 % en poids et une température de transition vitreuse (Tg) comprise entre 0 °C et - 80 °C lorsqu'elle est mesurée par Analyse thermique différentielle. La teneur en liaisons vinyliques de la fraction butadiènique incorporée peut être comprise entre 20 et 80 %, la teneur en liaisons trans-1,4 peut être comprise entre 20 et 80 %, et la teneur en liaisons Cis-1,4 est complémentaire des teneurs en liaisons vinyliques plus trans-1,4. A titre préférentiel, la teneur en liaisons vinyliques du copolymère est supérieure à 50 % et plus particulièrement comprise entre 55 % et 65 %, la teneur en liaisions trans-1,4 est comprise entre 20 % et 25 %, la teneur en styrène est comprise entre 25 % et 30 % en poids et la Tg est comprise entre - 20 °C et - 30 °C.

La silice utilisable comme charge renforçante dans la composition conforme à l'invention est toute silice particulière qui possède une surface BET comprise entre 100 et 250 $m^2/g$, et à titre préférentiel une surface BET comprise entre 130 et 220 $m^2/g$, une surface CTAB comprise entre 100 et 250 $m^2/g$ et à titre préférentiel une surface CTAB comprise entre 150/200 $m^2/g$, une prise d'huile mesurée en DBP comprise entre 150 et 250 ml/100 g et une aire projetée moyenne des agrégats supérieure à 8500 $nm^2$ et de préférence comprise entre 9 000 et 11 000 $nm^2$ avant mise en oeuvre et comprise entre 7000 et 8400 $nm^2$ après mélangeage thermo-mécanique avec un élastomère. La silice particulière sélectionnée peut être utilisée seule ou en présence d'autres charges comme par exemple du noir de carbone ou une autre silice conventionnelle, c'est-à-dire ne possédant l'ensemble des caractéristiques indiquées ci-dessus. L'amélioration des propriétés est d'autant plus importante que la proportion de silice particulière est importante par rapport aux autres charges éventuellement présentes. A titre préférentiel, la silice particulière est utilisée dans une proportion majoritaire par rapport à la quantité d'autre charge, comme le noir de carbone, présente. L'amélioration est optimale lorsque la silice particulière constitue la totalité de la charge.

A titre de silice particulière utilisable dans la composition conforme à l'invention convient par exemple la silice obtenue selon le procédé décrit dans la demande de brevet européen EP-A-157 703.

Les mesures des surfaces BET et CTAB ainsi que la prise d'huile sont mesurées selon les méthodes décrites dans la demande de brevet européen EP-A-157 703.

L'aire projetée moyenne de la silice est déterminée selon la méthode suivante. Dans un becher contenant un mélange de 10 ml d'eau et de 20 ml d'alcool isopropylique on immerge 150mg de silice, on agite l'ensemble aux ultra-sons durant 60 minutes, après quoi, tout en continuant l'agitation aux ultra-sons, on prélève à l'aide d'une micropipette une ou deux gouttes de 10 microlitres du contenu du becher que l'on dépose sur la grille d'un microscope électronique en cuivre avec membranes en formvar carbonée. Trois prélèvements successifs sont déposés sur trois grilles présentant chacune environ 3400 agregats. L'aire projetée moyenne de 10 000 agrégats est déterminée en effectuant une mesure "ON-LINE" à l'aide d'un couplage d'un microscope électronique à transmission et d'un analyseur d'images grossies 100 000 fois. Cette méthode est utilisée pour calculer l'aire projetée moyenne de la silice d'une part avant mise en oeuvre dans la composition et d'autre part après extraction d'une composition, bande de roulement ou d'un pneu vulcanisés ou non.

L'extraction de la silice d'un mélange caoutchouteux est réalisée de la façon suivante :

On découpe le mélange caoutchouteux non vulcanisé ou vulcanisé en fines feuilles que l'on place durant une heure dans un four à pyrolyse balayé par un courant d'azote porté à une température de 525°C ± 25°C et que l'on retire du four lorsqu'il s'est refroidi à une température voisine de 100°C. Le résidu de la pyrolyse après avoir été grossièrement broyé est disposé dans un bécher dans lequel on ajoute 50 ml d'acide chlorhydrique à 22° baumé et 50 ml d'eau, l'ensemble est porté à ébullition durant 10 minutes après quoi on laisse refroidir puis filtre le liquide refroidi sous vide sur un filtre Whatman sans cendres N° 42 CAT N° 1 442 055. Le résidu de filtration est lavé à deux reprises avec 20 ml d'eau bidistillée puis avec 20 ml d'acétone afin d'éliminer les impuretés présentes dans le résidu de pyrolyse après quoi on récupère la silice. Si le mélange initial contient du noir de carbone, le résidu récupéré après lavage est introduit dans un four à mouffle sous air qui est porté à une température de 800°C où il séjourne durant une heure après quoi on récupère la silice sous forme d'une poudre blanche.

La composition conforme à l'invention contient également les autres constituants et additifs habituellement utilisés dans des mélanges de caoutchouc comme des plastifiants, pigments, antioxydants, du soufre, des accélérateurs de vulcanisation, des huiles d'extension naphténiques ou aromatiques si l'on désire la présence d'une huile d'extension, un agent renforçant tel qu'un silane, un agent de couplage de silice, etc...

Pour obtenir une composition conforme à l'invention possèdant l'ensemble des propriétés et en particulier une très bonne résistance à l'usure, il faut soumettre le copolymère préparé en solution et la silice particulière à un travail mécanique dans tout dispositif approprié comme par exemple dans un mélangeur ou une boudineuse pendant la durée appropriée pour qu'il engendre au moins une étape thermique dont les températures minimales à atteindre et maximale à ne pas dépasser sont comprises entre 130°C et 180°C et de préférence sont comprises entre 145° et 180°C.

La durée appropriée du travail thermo-mécanique varie en fonction des conditions opératoires retenues par l'homme de l'art et en particulier de la température choisie et comprise dans la fourchette des valeurs indiquées, de la nature et du volume des constituants soumis au travail mécanique, l'essentiel étant que le travail mécanique initie une excellente prédispersion de la silice se traduisant par une diminution de la taille des particules de silice, et que l'intensité thermique requise soit atteinte par le couple temps-température et ce indépendamment du nombre d'étapes utilisées pour atteindre ce niveau d'intensité afin qu'elle s'accompagne d'une maximisation du rapport module d'allongement à 300 %/module d'allongement à 100 %. Ainsi en fonction des dispositifs thermo-mécaniques utilisés pour réaliser ce travail thermo-mécanique, la durée peut varier de dix secondes à vingt minutes et pourra être déterminée par l'homme de l'art sur la base de ses connaissances générales et du contrôle des propriétés de la composition utilisée sous forme de bande de roulement de pneumatiques sachant qu'il convient de maximiser le rapport module d'allongement à 300 %/module d'allongement à 100 % pour chaque composition. Ainsi le travail thermo-mécanique peut ne comprendre qu'une seule étape thermo-mécanique de durée, de température et intensité appropriées ou comprendre plusieurs étapes thermo-mécaniques pouvant être séparées par au moins une étape de refroidissement. A titre préférentiel de travail thermo-mécanique en plusieurs étapes, convient particulièrement un travail comportant deux étapes thermiques atteignant chacune une température maximale supérieure à 145°C séparées par une étape de refroidissement à une température inférieure à 100°C. Durant la

première étape, le copolymère préparé en solution ainsi que la silice et l'agent renforçant, le plastifiant, l'huile d'extension, s'il y a lieu, sont mélangés mécaniquement jusqu'à ce que le mélange atteigne une température supérieure à 145°C et de préférence à une température comprise entre 145°C et 170°C. Le bloc de gomme obtenu est ensuite refroidi à une température inférieure à 100°C, et préférentiellement à 60°C, puis dans une deuxième étape il est soumis à un travail mécanique dans un mélangeur interne en même temps qu'on ajoute tous les autres constituants à l'exception du système de vulcanisation jusqu'à ce que le mélange atteigne une température supérieure à 145°C et de préférence une température comprise entre 145°C et 170°C. De manière tout à fait préférentielle, les températures maximales des deux étapes thermiques sont identiques et atteignent 165°C. Au bloc de gomme obtenu à l'issue de la deuxième étape thermique, on ajoute l'ensemble du système de vulcanisation soufré comprenant le soufre et les accélérateurs de vulcanisation par travail mécanique de finition par exemple sur un mélangeur externe à une température inférieure à 100°C. La composition est ensuite tirée en feuilles pour une mise en forme et une vulcanisation au moment souhaité à une température et par les moyens conventionnels. L'aire projetée moyenne de la silice est comprise entre 7000 et 8400 $nm^2$ dans la composition obtenue ainsi que dans les bandes de roulement et les pneus réalisés à l'aide de la composition conforme à l'invention.

L'excellent compromis des propriétés est également obtenu lorsque le copolymère préparé en solution utilisé seul ou en coupage avec un autre élastomère diénique est un copolymère étoilé au moyen d'un agent ramifiant, comme par exemple l'un des agents ramifiants décrits dans le brevet français FR-A-2 053 786, comportant le groupe -O- C(=O) -O- ou -O- C(=O) -R- C(=O)-O-, R étant un radical hydrocarboné, ou un copolymère possédant un groupement silane tel qu'obtenu par réaction d'un copolymère à fonction terminale C-Li avec un agent de fonctionnalisation, tel que décrit dans la demande de brevet japonais publiée JP-A-56-104 906 répondant à la formule $X_n$ - $(R')_m$ - Si $(OR)_3$ dans laquelle X représente un atome d'halogène, R un groupe méthyle ou éthyle, n est égal à 0 ou 1, m représente un nombre entier égal à 3 ou 4, et R' un radical aliphatique. Cet excellent compromis des propriétés est de même obtenu lorsque le copolymère préparé en solution est un copolymère soumis à un couplage, à un greffage ou à un étoilage comme connu en soi.

L'invention est illustrée à titre non limitatif par les exemples. Dans les différents exemples, les propriétés finales de la composition conforme à l'invention et des compositions témoins sont exprimées sous la forme des propriétés de pneus à carcasse radiale de dimension 175/70-13 conventionnellement fabriqués qui sont en tous points identiques hormis la constitution de la composition de caoutchouc constitutive de la bande de roulement. Les différentes propriétés sont évaluées comme suit :

- adhérence transversale sur sol humide : détermination de la limite d'adhérence sur une piste circulaire arrosée d'un véhicule de tourisme décrivant des cercles en régime stabilisé à la vitesse la plus élevée possible,
- adhérence sur sol humide : détermination de la durée mise par un véhicule de tourisme pour parcourir un trajet arrosé comportant différentes compositions de revêtements routiers présentant des lignes droites et des courbes,
- adhérence sur sol enneigé : détermination du comportement et de la performance de pneus sur différents états de neige rencontrés en circulation routière hivernale.
- résistance au roulement : mesurée sur volant selon la méthode SAE J 12 69 de juin 1980,
- durée de vie sur usure : déterminée par le kilométrage parcouru jusqu'à ce que l'usure atteigne les témoins d'usure disposés dans les rainures. Toutes les valeurs obtenues supérieures à la référence 100 expriment une amélioration des propriétés mesurées.
- bruit de roulage : déterminé par mesure en bord de piste par la méthode dite "Coast down" à 60 et 80 km/h par mesure de la puissance acoustique. Il est exprimé en décibel(s) dB(A). Une amélioration de 1dB(A) par rapport à la valeur de référence est notée - 1 dB(A).
- modules d'allongement à 300 % (MA300) et 100 % (MA 100) : mesures effectuées selon la norme ISO 37

## Exemple 1

Dans cet exemple, on compare une bande de roulement de pneu constituée d'une composition conforme à l'invention issue d'un travail thermo-mécanique comportant deux étapes thermiques (Essai I) avec quatre bandes de roulement différentes conformes à l'art antérieur : la première constituée par une composition classique d'un SBR préparé en émulsion ayant exclusivement du noir de carbone à titre de charge (Essai T), la seconde constituée par une composition classique à base d'un SBR préparé en émulsion ayant exclusivement une silice conventionnellement utilisée à titre de charge renforçante (Essai C), la troisième également à base d'un SBR préparé en émulsion et ayant à titre de charge renforçante

exclusivement la silice particulière sélectionnée pour la composition conforme à l'invention parmi les silices décrites selon la demande de brevet européen 157 703 (Essai S) et la quatrième constituée par un SBR préparé en solution utilisé en coupage avec du polybutadiène ayant à titre de charge exclusivement du noir de carbone (Essai N).

Pour ces essais, la température maximale des deux étapes thermiques est de 165 °C et les compositions suivantes pour lesquelles toutes les parties sont exprimées en poids ont été utilisées :

TABLEAU 1

| CONSTITUANTS \ ESSAIS | T | C | S | N | I |
|---|---|---|---|---|---|
| SBR émulsion | 100 | 100 | 100 | | |
| SBR Solution /PB | | | | 75/25 | 75/25 |
| Noir N234 | 80 | | | 80 | |
| Silice Classique | | 80 | | | |
| Agent renforçant | | 12,8 | 12,8 | | 12,8 |
| Silice selon le brevet EP-A-157 703 | | | 80 | | 80 |
| Huile aromatique (Sundex 8125) | 37,5 | 37,5 | 37,5 | 32,5 | 32,5 |
| Oxyde de zinc | 2,5 | 2,5 | 2,5 | 2,5 | 2,5 |
| Acide stéarique | 1 | 1 | 1 | 1 | 1 |
| Antioxydant | 2 | 2 | 2 | 2 | 2 |
| Paraffine | 1,5 | 1,5 | 1,5 | 1,5 | 1,5 |
| Soufre | 1,35 | 1,4 | 1,4 | 1,35 | 1,4 |
| Sulfènamide | 1,35 | 1,7 | 1,7 | 1,35 | 1,7 |
| Diphénylguanidine | - | 2 | 2 | - | 2 |

Les caractéristiques des constituants ci-dessous sont les suivantes :

- SBR émulsion : copolymère de butadiène-styrène préparé en émulsion ayant une teneur en styrène de 32 %, une teneur en liaisons trans-1,4 de 74 %, en liaisons vinyliques de 16 % et une Tg de -38 °C vendu sous la dénomination commerciale Cariflex 5820 par la Société Shell.
- SBR solution : copolymère de butadiène-styrène préparé en solution selon le procédé décrit dans la demande de brevet français n° 2 295 972, ayant une teneur en styrène de 26 %, une teneur en liaisons vinyliques de 60 %, une teneur en liaisons trans-1,4 de 22 % et en liaisons cis-1,4 de 18 %, une Tg de - 25 °C et soumis à un étoilage avec du diethylene glycol selon le procédé décrit dans le brevet français 2 053 786.
- Le polybutadiène (PB) est un polybutadiène ayant 93 % de liaisons cis-1,4 obtenu par le procédé décrit dans le brevet français n° 1 436 607.
- Noir N234 : BET 120 $m^2/g$, DBP 125 ml/100 g mesurés respectivement selon les normes ASTM D4567 et D 2414 ;
- Silice classique : BET 190 $m^2/g$ ; CTAB : 160 $m^2/g$ ; aire projetée comprise entre 7300 et 7800 $nm^2$ commercialisée par Rhône Poulenc sous la dénomination commerciale RP 175 ;
- Silice selon le brevet EP 157 703 : BET 180 $m^2/g$, CTAB : 160 $m^2/g$ ; aire projetée moyenne avant mise en oeuvre 10 530 $nm^2$ et après mélangeage thermo-mécanique 7600 $nm^2$ ;
- Antioxydant : N-(1,3-dimethylbutyl)-N'-phényl-p-phenylenediamine ;
- Paraffine : mélange de cires macro- et microcristallines ;
- Sulfénamide : n-cyclohexyl-2-benzothiazyl-sulfénamide ;
- Agent renforçant : mélange dans le rapport 1 : 1 de noir de carbone N 330 et d'organosilane polysulfuré commercialisé par Degussa sous la référence X 50S.

Les propriétés de ces compositions sont consignées dans le tableau 2 et la valeur arbitraire de 100 a été attribuée à la composition T qui est représentative des compositions utilisées jusqu'à présent par l'ensemble des fabricants de pneus tandis que les valeurs expérimentales relevées pour les autres compositions sont indiquées en valeurs relatives par rapport à la valeur 100 de référence, une valeur supérieure à 100 indiquant une amélioration de la propriété considérée.

**TABLEAU 2**

| PROPRIETES \ ESSAIS | T | C | S | N | I |
|---|---|---|---|---|---|
| Adhérence transversale sur sol humide | 100 | 105 | 106 | 101 | 106 |
| Adhérence sur sol humide | 100 | 103 | 104 | 99 | 103 |
| Adhérence sur sol enneigé | 100 | 104 | 104 | 100 | 104 |
| Résistance au roulement | 100 | 113 | 114 | 101 | 115 |
| Bruit de roulage (dB = décibel) | 100 | - 1dB(A) | - 1dB(A) | 100 | - 1dB(A) |
| Durée de vie sur usure | 100 | 75 | 85 | 94 | 102 |

On constate que la composition conforme à l'invention possède le meilleur compromis entre des propriétés très contradictoires et ce de manière tout à fait significative tout en présentant un bruit de

roulage réduit. Cette composition est tout à fait adaptée pour un pneu performant en toutes saisons. En outre, on constate que ce meilleur compromis n'est obtenu que par l'association d'un copolymère solution avec la silice sélectionnée qui dans les pneus correspondant aux essais S et I possède une aire projetée moyenne de 7600 $nm^2$.

## Exemple 2

Cet exemple montre que cet excellent compromis de propriétés antagonistes est obtenu avec des copolymères d'un diène conjugué et d'un composé vinyle aromatique préparés en solution de microstructures variées et ce qu'ils soient utilisés seuls ou en coupage avec un autre élastomère diénique.

On opère de la même manière qu'à l'exemple 1 hormis le fait qu'on utilise un SBR solution de microstructure différente. Les compositions utilisées et leurs propriétés sont consignées dans les tableaux 3 et 4 :

TABLEAU 3

| CONSTITUANTS \ ESSAIS | T | $I_1$ |
|---|---|---|
| SBR émulsion | 100 | |
| SBR Solution | | 100 |
| Noir N234 | 80 | |
| Silice Classique | | |
| Agent renforçant | | 12,8 |
| Silice selon le brevet EP 157 703 | | 80 |
| Huile aromatique (Sundex 8125) | 37,5 | 32,5 |
| Oxyde de zinc | 2,5 | 2,5 |
| Acide stéarique | 1 | 1 |
| Antioxydant | 2 | 2 |
| Paraffine | 1,5 | 1,5 |
| Soufre | 1,35 | 1,4 |
| Sulfénamide | 1,35 | 1,7 |
| Diphénylguanidine | | 2 |

Le copolymère de butadiène-styrène préparé en solution utilisé dans cet exemple possède une teneur en styrène de 32 %, une teneur en liaisons vinyliques de 24 %, en liaisons trans 1,4 de 48 %, en liaisons cis-1,4 de 28 % et une Tg de - 38 °C.

TABLEAU 4

| PROPRIETES \ ESSAIS | T | $I_1$ |
|---|---|---|
| Adhérence transversale sur sol humide | 100 | 106 |
| Adhérence sur sol humide | 100 | 104 |
| Adhérence sur sol enneigé | 100 | 105 |
| Résistance au roulement | 100 | 115 |
| Bruit de roulage (dB = décibel) | 100 | - 1dB(A) |
| Durée de vie sur usure | 100 | 98 |

## Exemple 3

Cet exemple montre que l'amélioration des propriétés antagonistes est d'autant plus importante que la charge de silice sélectionnée est importante par rapport aux autres charges présentes.

Les compositions utilisées dans cet exemple sont identiques à celle des essais N et I du tableau 1 à l'exception de la quantité et de la nature de la charge utilisée, le taux d'agent renforçant étant proportionnel au taux de silice présent.

On réalise quatre essais dans lesquels seules changent les proportions respectives de silice et de noir de carbone. Les propriétés sont consignées dans le tableau 5.

**TABLEAU 5**

| PROPRIETES \ ESSAIS | N<br>100 % Noir | I<br>100 % Silice | 1<br>75 % Silice<br>25 % Noir | 2<br>75 % Noir<br>25 % Silice |
|---|---|---|---|---|
| Adhérence sur sol humide | 99 | 103 | 102 | 100 |
| Adhérence sur sol enneigé | 100 | 104 | 103 | 101 |
| Résistance au roulement | 101 | 115 | 111 | 103 |
| Durée de vie sur usure | 94 | 102 | 99 | 96 |

## Exemple 4

Cet exemple montre que cet excellent compromis de propriétés antagonistes n'est obtenu que lorsque le travail thermo-mécanique est suffisamment intense en température et durée dans la plage de température de 130 °C à 180 °C considérée peu importe le nombre d'étapes thermiques.

Dans cet exemple on réalise un essai I2 en opérant exactement comme pour l'essai I de l'exemple 1 excepté le fait qu'on réalise une seule étape thermique de température maximale de 165 °C suivie d'un refroidissement et de l'étape de finition, un essai I3 en opérant comme pour l'essai I2 excepté le fait que la durée de l'étape thermique a été allongée pour atteindre environ 5 minutes et un essai I4 en opérant comme pour l'essai I2 excepté le fait que la température maximale atteinte est de 150 °C et la durée de l'étape thermo-mécanique est de environ 9 minutes. Le rapport MA300/MA100 pour les compositions I et $I_2$ est respectivement proche de 4 et proche de 3,3. Les propriétés des pneus comportant les bandes de roulements faisant l'objet des essais I, I2, I3 et I4 sont consignées dans le tableau 6.

**TABLEAU 6**

| PROPRIETES \ ESSAIS | I | I2 | I3 | I4 |
|---|---|---|---|---|
| Adhérence transversale sur sol humide | 103 | 102 | 103 | 103 |
| Résistance au roulement | 115 | 112 | 115 | 115 |
| Durée de vie sur usure | 102 | 92 | 102 | 100 |

On constate que seules les compositions I, I3 et I4 pour lesquelles le couple température/durée a atteint l'intensité requise possèdent une excellente résistance à l'usure en même temps qu'une excellente résistance au roulement et une très bonne adhérence sur sol humide, ce qui n'est pas le cas de la

composition de l'essai I2 qui révèle une résistance à l'usure bien insuffisante.

**Exemple 5**

Cet exemple montre que cet excellent compromis de propriétés antagonistes est également obtenu lorsque le copolymère de diène conjugué et de composé vinyle aromatique préparé en solution est un copolymère fonctionnalisé.

La composition mise en oeuvre dans l'essai F est identique à celle utilisée dans l'essai I de l'exemple 1 hormis le fait que les extrémités vivantes C-Li du copolymère préparé en solution sont mises à réagir comme connu en soi avec du 3-chloropropyltriethoxysilane.

Les propriétés sont consignées dans le tableau 7 :

**TABLEAU 7**

| PROPRIETES \ ESSAIS | T | F |
|---|---|---|
| Adhérence sur sol humide | 100 | 103 |
| Adhérence sur sol enneigé | 100 | 104 |
| Résistance au roulement | 100 | 120 |
| Durée de vie sur usure | 100 | 98 |

On constate que l'utilisation de polymères préparés en solution et fonctionnalisés permet en outre de bénéficier du gain de la résistance au roulement obtenu par la fonctionnalisation du copolymère préparé en solution.

**Revendications**

1. Composition de caoutchouc vulcanisable au soufre à base d'un copolymère de diène conjugué et d'un composé vinyle aromatique comportant de la silice à titre de charge, caractérisée en ce qu'elle est obtenue par travail mécanique d'un copolymère de diène conjugué et d'un composé vinyle aromatique préparé par polymérisation en solution dans un solvant hydrocarboné, ayant une teneur globale en composé vinyle aromatique comprise entre 5 % et 50 % et une température de transition vitreuse (Tg) comprise entre 0 °C et -80 °C avec 30 à 150 parties en poids pour 100 parties en poids d'élastomère d'une silice présentant une surface BET comprise entre 100 et 250 $m^2/g$, une surface CTAB comprise entre 100 et 250 $m^2/g$, une prise d'huile mesurée en DBP comprise entre 150 et 250 ml/100 g et une aire projetée moyenne des agregats supérieure à 8500 $nm^2$ avant mise en oeuvre et comprise entre 7000 et 8400 $nm^2$ après mélangeage thermo-mécanique ainsi que les additifs conventionnellement utilisés, à l'exception du système de vulcanisation, comportant au moins une étape thermique atteignant une température maximale comprise entre 130 °C et 180 °C pendant une durée appropriée qui est fonction de la température choisie pour le travail mécanique, de la nature et du volume des constituants soumis audit travail thermo-mécanique et qui est comprise entre 10 secondes et 20 minutes, suivie d'une étape de finition durant laquelle est ajouté le système de vulcanisation par travail mécanique à une température inférieure à la température de vulcanisation.

2. Composition de caoutchouc selon la revendication 1, caractérisée en ce que le travail thermo-mécanique s'accompagne d'une maximisation du rapport module d'allongement à 300 %/module d'allongement à 100 %.

3. Composition de caoutchouc selon l'une quelconque des revendications 1 et 2, caractérisée en ce que le travail mécanique comporte au moins deux étapes thermiques atteignant chacune une température supérieure à 145 °C séparées par au moins une étape de refroidissement à une température inférieure

à 100 ° C et suivies d'une étape de finition durant laquelle est ajouté le système de vulcanisation par travail mécanique à une température inférieure à 100 ° C.

**4.** Composition de caoutchouc selon la revendication 3, caractérisée en ce que la température des deux étapes mécaniques est comprise entre 145 ° C et 165 ° C.

**5.** Composition de caoutchouc selon l'une quelconque des revendications 1 à 4, caractérisée en ce que le copolymère préparé en solution est un copolymère de butadiène styrène ayant une teneur en styrène comprise entre 25 et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 ° C et - 30 ° C.

**6.** Composition de caoutchouc selon l'une quelconque des revendications 1 à 5, caractérisée en ce que le copolymère préparé en solution est étoilé avec un agent comportant le groupe

$$-O-\underset{\overset{\|}{O}}{C}-O- \quad \text{ou} \quad -O-\underset{\overset{\|}{O}}{C}-R-\underset{\overset{\|}{O}}{C}-O-,$$

R étant un radical hydrocarboné.

**7.** Composition de caoutchouc selon l'une quelconque des revendications 1 à 6, caractérisée en ce qu'elle comprend de 0 à 70 parties en poids d'au moins un autre élastomère diénique choisi parmi le caoutchouc naturel, le polyisoprène, le polybutadiène.

**8.** Composition de caoutchouc selon la revendication 7, caractérisée en ce que l'élastomère diénique est du polybutadiène ayant plus de 90 % de liaisons Cis-1,4.

**9.** Composition de caoutchouc selon l'une quelconque des revendications 1 à 8, caractérisée en ce qu'elle comporte en outre du noir de carbone ou une autre charge renforçante en quantité pondérale minoritaire par rapport à la quantité de silice.

**10.** Composition de caoutchouc selon l'une quelconque des revendications 1 à 9, caractérisée en ce que le copolymère préparé en solution est modifié par réaction en fin de polymérisation avec un silane répondant à la formule $X_n-(R')_m$ - Si $(OR)_3$ dans laquelle X représente un atome d'halogène, R un groupe méthyle ou éthyle, n est égal à 0 ou 1, m représente un nombre entier égal à 3 ou 4, et R' un radical aliphatique.

**11.** Bande de roulement de pneumatique, caractérisée en ce qu'elle comporte une composition de caoutchouc obtenue par travail mécanique d'un copolymère de diène conjugué et d'un composé vinyle aromatique préparé par polymérisation en solution dans un solvant hydrocarboné ayant une teneur globale en composé vinyle aromatique comprise entre 5 % et 50 % en poids et une température de transition vitreuse (Tg) comprise entre 0 ° C et -80 ° C avec 30 à 150 parties en poids pour 100 parties en poids d'élastomère d'une silice présentant une surface BET comprise entre 100 et 250 $m^2$/g, une surface CTAB comprise entre 100 et 250 $m^2$/g, une prise d'huile mesurée en DBP comprise entre 150 et 250 ml/100 g et une aire projetée moyenne des agregats supérieure à 8500 $nm^2$ avant mise en oeuvre et comprise entre 7000 et 8400 $nm^2$ dans la bande de roulement ainsi que les additifs conventionnellement utilisés, à l'exception du système de vulcanisation, comportant au moins une étape thermique atteignant une température maximale comprise entre 130 ° C et 180 ° C pendant une durée appropriée qui est fonction de la température choisie pour le travail mécanique ,de la nature et du volume des constituants soumis audit travail thermo-mécanique et qui est comprise entre 10 secondes et 20 minutes suivie d'une étape de finition durant laquelle est ajouté le système de vulcanisation par travail mécanique à une température inférieure à la température de vulcanisation.

**12.** Bande de roulement de pneumatique selon la revendication 11, caractérisée en ce que le travail thermo-mécanique s'accompagne d'une maximisation du rapport module d'allongement à 300 %/module d'allongement à 100 %.

13. Bande de roulement de pneumatique selon l'une quelconque des revendications 11 et 12, caractérisée en ce que le travail thermo-mécanique comporte au moins deux étapes atteignant chacune une température comprise entre 145 ° C et 165 ° C.

14. Bande de roulement de pneumatique selon l'une quelconque des revendications 11 à 13, caractérisée en ce que le copolymère préparé en solution est un copolymère de butadiène styrène ayant une teneur en styrène comprise entre 25 et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 ° C et- 80 ° C.

15. Bande de roulement selon l'une quelconque des revendications 11 à 14, caractérisée en ce qu'elle comprend de 0 à 70 parties en poids d'au moins un autre élastomère diénique choisi parmi le caoutchouc naturel, le polyisoprène, le polybutadiène.

16. Bande de roulement de pneumatique selon l'une quelconque des revendications 11 à 15, caractérisée en ce qu'elle comporte en outre du noir de carbone ou une autre charge renforçante en quantité pondérale minoritaire par rapport à la quantité de silice.

17. Pneumatique caractérisé en ce qu'il possède une bande de roulement vulcanisée au soufre comportant une composition de de caoutchouc obtenue par travail mécanique d'un copolymère de diène conjugué et d'un composé vinyle aromatique préparé par polymérisation en solution dans un solvant, hydrocarboné ayant une teneur globale en composé vinyle aromatique comprise entre 5 % et 50 % et une température de transition vitreuse (Tg) comprise entre 0 ° C et -80 ° C avec 30 à 150 parties en poids pour 100 parties en poids d'élastomère d'une silice présentant une surface BET comprise entre 100 et 250 $m^2$/g, une surface CTAB comprise entre 100 et 250 $m^2$/g, une prise d'huile mesurée en DBP comprise entre 150 et 250 ml/100 g et une aire projetée moyenne des agregats supérieure à 8500 $nm^2$ avant mise en oeuvre et comprise entre 7000 et 8400 $nm^2$ dans le pneu ainsi que les additifs conventionnellement utilisés, à l'exception du système de vulcanisation, comportant au moins une étape thermique atteignant une température maximale comprise entre 130 ° C et 180 ° C pendant une durée appropriée qui est fonction de la température choisie pour le travail mécanique, de la nature et du volume des constituants soumis audit travail thermo-mécanique et qui est comprise entre 10 secondes et 20 minutes suivie d'une étape de finition durant laquelle est ajouté le système de vulcanisation par travail mécanique à une température inférieure à la température de vulcanisation.

18. Procédé de préparation d'une composition de caoutchouc vulcanisable au soufre à base d'un copolymère de diène conjugué et d'un composé vinyle aromatique comportant de la silice à titre de charge, caractérisé en ce que l'on mélange par travail mécanique sur outil un copolymère de diène conjugué et d'un composé vinyle aromatique préparé par polymérisation en solution dans un solvant hydrocarboné ayant une teneur en styrène comprise entre 5 % et 50 % et une température de transition vitreuse comprise entre 0 ° C et -80 ° C, seul ou en association avec un autre élastomère diénique, avec 30 à 150 parties en poids d'élastomère d'une silice présentant une surface BET comprise entre 100 et 250 $m^2$/g, une surface CTAB comprise entre 100 et 250 $m^2$/g et une prise d'huile mesurée en DBP comprise entre 150 et 250 ml/100 g et une aire projetée moyenne des agrégats supérieure à 8500 $nm^2$ avant mise en oeuvre et éventuellement une autre charge renforçante présente en quantité pondérale minoritaire par rapport à la silice ainsi que les additifs conventionnellement utilisés à l'exception du système de vulcanisation de manière à ce que le travail mécanique comporte au moins une étape thermique atteignant une température maximale comprise entre 130 ° C et 180 ° C pendant une durée appropriée qui est fonction de la température choisie pour le travail mécanique , de la nature et du volume des constituants soumis audit travail thermo-mécanique qui diminue l'aire projetée moyenne des agrégats de silice pour qu'elle soit comprise entre 7000 et 8400 $nm^2$ après mélangeage thermo-mécanique, ladite durée étant comprise entre 10 secondes et vingt minutes et que l'on incorpore ensuite par travail mécanique de finition au mélange obtenu le système de vulcanisation à une température inférieure à la température de vulcanisation.

19. Procédé selon la revendication 18 caractérisé en ce que le travail thermo-mécanique s'accompagne d'une maximisation du rapport module d'allongement à 300 %/module d'allongement à 100 %.

## Claims

1. A sulphur-vulcanisable rubber composition having a base of a copolymer of conjugated diene and an aromatic vinyl compound containing silica as reinforcing filler, characterised in that it is obtained by mechanical working of a copolymer of conjugated diene and an aromatic vinyl compound prepared by polymerisation in solution in a hydrocarbon solvent and having a total content of aromatic vinyl compound of between 5% and 50% and a glass transition temperature (Tg) of between 0 °C and -80 °C and 30 to 150 parts by weight to 100 parts by weight of elastomer of a silica having a BET surface area of between 100 and 250 $m^2/g$, a CTAB surface area of between 100 and 250 $m^2/g$, an oil absorption measured in DBP of between 150 and 250 ml/100 g, and an average projected area of the aggregates of more than 8500 $nm^2$ before use and between 7000 and 8400 $nm^2$ after thermomechanical mixing, as well as the additives conventionally used, with the exception of the vulcanisation system, comprising at least one thermal step having a maximum temperature of between 130 °C and 180 °C for a suitable period of time which is a function of the temperature selected for the mechanical working and of the nature and volume of the components subjected to the said thermomechanical working, and which is between 10 seconds and 20 minutes, followed by a finishing step during which the vulcanisation system is added by mechanical working at a temperature below the vulcanisation temperature.

2. A rubber composition according to Claim 1, characterised in that the thermomechanical working is accompanied by maximising of the ratio of 300% elongation modulus to 100% elongation modulus.

3. A rubber composition according to any one of Claims 1 or 2, characterised in that the mechanical working comprises at least two thermal steps, each reaching a temperature of more than 145 °C, separated by at least one cooling step to a temperature below 100 °C and followed by a finishing step during which the vulcanisation system is added by mechanical working at a temperature below 100 °C.

4. A rubber composition according to Claim 3, characterised in that the temperature of the two mechanical steps is between 145 °C and 165 °C.

5. A rubber composition according to any one of Claims 1 to 4, characterised in that the copolymer prepared in solution is a butadiene-styrene copolymer having a styrene content of between 25 and 30% by weight, a content of vinyl bonds of the butadiene part of between 55% and 65%, a content of trans-1,4 bonds of between 20 and 25% and a glass transition temperature of between - 20 °C and -30 °C.

6. A rubber composition according to any one of Claims 1 to 5, characterised in that the copolymer prepared in solution is starred with an agent containing the group

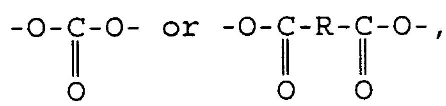

R being a hydrocarbon

7. A rubber composition according to any one of Claims 1 to 6, characterised in that it comprises from 0 to 70 parts by weight of at least one other diene elastomer selected from among natural rubber, polyisoprene and polybutadiene.

8. A rubber composition according to Claim 7, characterised in that the diene elastomer is polybutadiene having more than 90% cis-1,4 bonds.

9. A rubber composition according to any one of Claims 1 to 8, characterised in that it furthermore comprises carbon black or another reinforcing filler in a minority quantity by weight compared with the quantity of silica.

10. A rubber composition according to any one of Claims 1 to 9, characterised in that the copolymer prepared in solution is modified by reaction at the end of polymerisation with a silane having the

formula $X_n$-$(R')_m$-Si $(OR)_3$, in which X represents a halogen atom, R a methyl or ethyl group, n is equal to 0 or 1, m represents an integer equal to 3 or 4 and R' is an aliphatic radical.

**11.** A tyre tread, characterised in that it comprises a rubber composition obtained by mechanical working of a copolymer of conjugated diene and a vinyl aromatic compound prepared by solution polymerisation in a hydrocarbon solvent, having a total content of aromatic vinyl compound of between 5% and 50% by weight and a glass transition temperature (Tg) of between 0 °C and -80 °C with 30 to 150 parts by weight per 100 parts by weight of elastomer of a silica having a BET surface area of between 100 and 250 $m^2$/g, a CTAB surface area of between 100 and 250 $m^2$/g, an oil absorption measured in DBP of between 150 and 250 ml/100 g, and an average projected area of the aggregates greater than 8500 $nm^2$ before use and between 7000 and 8400 $nm^2$ in the tread as well as the conventionally employed additives, with the exception of the vulcanisation system, comprising at least one thermal step reaching a maximum temperature of between 130 °C and 180 °C for a suitable period of time which is a function of the temperature selected for the mechanical working and of the nature and volume of the components subjected to said thermomechanical working, and which is between 10 seconds and 20 minutes, followed by a finishing step during which the vulcanisation system is added by mechanical working at a temperature below the vulcanisation temperature.

**12.** A tyre tread according to Claim 11, characterised in that the thermomechanical working is accompanied by a maximising of the ratio of the 300% elongation modulus to the 100% elongation modulus.

**13.** A tyre tread according to any one of Claims 11 and 12, characterised in that the thermomechanical working comprises at least two steps, each reaching a temperature of between 145 °C and 165 °C.

**14.** A tyre tread according to any one of Claims 11 to 13, characterised in that the copolymer prepared in solution is a butadiene styrene copolymer having a styrene content of between 25 and 30% by weight, a content of vinyl bonds of the butadiene part of between 55% and 65%, a trans-1,4 bond content of between 20% and 25% and a glass transition temperature of between -20 °C and -80 °C.

**15.** A tyre tread according to any one of Claims 11 to 14, characterised in that it comprises from 0 to 70 parts by weight of at least one other diene elastomer selected from among natural rubber, polyisoprene and polybutadiene.

**16.** A tyre tread according to any one of Claims 11 to 15, characterised in that it furthermore comprises carbon black or another reinforcing filler in a minority amount by weight referred to the amount of silica.

**17.** A tyre, characterised in that it has a sulphur-vulcanised tread comprising a rubber composition obtained by mechanical working of a copolymer of conjugated diene and an aromatic vinyl compound prepared by solution polymerisation in a hydrocarbon solvent having a total content of aromatic vinyl compound of between 5% and 50% and a glass transition temperature (Tg) of between 0 °C and -80 °C with 30 to 150 parts by weight per 100 parts by weight of elastomer of a silica having a BET surface area of between 100 and 250 $m^2$/g, a CTAB surface area of between 100 and 250 $m^2$/g, an oil absorption measured in DBP of between 150 and 250 ml/100 g, and an average projected area of the aggregates greater than 8500 $nm^2$ before use and between 7000 and 8400 $nm^2$ in the tyre, as well as the additives conventionally employed, with the exception of the vulcanisation system, comprising at least one thermal step reaching a maximum temperature of between 130 °C and 180 °C for a suitable period of time which is a function of the temperature selected for the mechanical working and of the nature and volume of the components subjected to said thermomechanical working and which is between 10 seconds and 20 minutes, followed by a finishing step during which the vulcanisation system is added by mechanical working at a temperature below the vulcanisation temperature.

**18.** A method of preparing a sulphur-vulcanisable rubber composition having a base of a copolymer of conjugated diene and an aromatic vinyl compound containing silica as filler, characterised in that a copolymer of conjugated diene and an aromatic vinyl compound prepared by solution polymerisation in a hydrocarbon solvent having a styrene content of between 5% and 50% and a glass transition temperature of between 0 °C and -80 °C, alone or in association with another diene elastomer, are mixed by mechanical work using a tool with 30 to 150 parts by weight of elastomer of a silica having a BET surface area of between 100 and 250 $m^2$/g, a CTAB surface area of between 100 and 250 $m^2$/g, an

oil absorption measured in DBP of between 150 and 250 ml/100 g, and an average projected area of the aggregates greater than 8500 $nm^2$ before use and possibly another reinforcing filler present in a minority amount by weight compared with the silica, as well as the additives conventionally used with the exception of the vulcanisation system in such a manner that the mechanical working comprises at least one thermal step reaching a maximum temperature of between 130 °C and 180 °C for a suitable period of time which is a function of the temperature selected for the mechanical working and of the nature and volume of the components subjected to said thermomechanical working, which decreases the average projected area of the silica aggregates so that it is between 7000 and 8400 $nm^2$ after thermomechanical mixing, said period of time being between 10 seconds and 20 minutes, and that the vulcanisation system is then incorporated in the resultant mixture by mechanical finishing work at a temperature below the vulcanisation temperature.

**19.** A method according to Claim 18, characterised in that the thermomechanical working is accompanied by a maximising of the ratio of the 300% elongation modulus to the 100% elongation modulus.

**Patentansprüche**

**1.** Mit Schwefel vulkanisierbare Kautschukzusammensetzung auf der Basis eines Copolymers eines konjugierten Diens mit einer aromatischen Vinylverbindung, die Siliciumdioxid als Füllstoff enthält,
**dadurch gekennzeichnet,**
daß sie erhalten ist durch mechanische Bearbeitung

- eines Copolymers eines konjugierten Diens mit einer aromatischen Vinylverbindung, das durch Polymerisation in Lösung in einem Kohlenwasserstofflösungsmittel hergestellt ist und einen Gesamtgehalt an aromatischer Vinylverbindung von 5 bis 50 % und eine Glasübergangstemperatur (Tg) von 0 bis -80 °C aufweist,
- mit 30 bis 150 Gewichtsteilen, auf 100 Gewichtsteile Elastomer, eines Siliciumdioxids, das eine BET-Oberfläche von 100 bis 250 $m^2/g$, eine CTAB-Oberfläche von 100 bis 250 $m^2/g$, eine gemessene Ölaufnahme an DBP von 150 bis 250 ml/100 g und eine mittlere Projektionsfläche der Aggregate von mehr als 8500 $nm^2$ vor dem Einsatz und von 7000 bis 8400 $nm^2$ nach dem thermomechanischen Mischen aufweist,
- sowie den herkömmlicherweise eingesetzten Additiven mit Ausnahme des Vulkanisationssystems,

wobei die thermomechanische Bearbeitung mindestens eine thermische Stufe umfaßt, in der eine maximale Temperatur von 130 bis 180 °C während einer geeigneten Dauer erreicht wird, die von der für die mechanische Bearbeitung gewählten Temperatur und von Art und Volumen der der thermomechanischen Bearbeitung unterzogenen Bestandteile abhängt und im Bereich von 10 s bis 20 min liegt, und sich daran eine Endbearbeitungsstufe anschließt, während der das Vulkanisationssystem durch mechanische Bearbeitung bei einer Temperatur unterhalb der Vulkanisationstemperatur zugegeben wird.

**2.** Kautschukzusammensetzung nach Anspruch 1,
dadurch gekennzeichnet,
daß die thermomechanische Bearbeitung von einer Maximierung des Verhältnisses 300 %-Modul/ 100 %-Modul begleitet wird.

**3.** Kautschukzusammensetzung nach Anspruch 1 oder 2,
dadurch gekennzeichnet,
daß die mechanische Bearbeitung mindestens zwei thermische Stufen umfaßt, in denen jeweils eine Temperatur von mehr als 145 °C erreicht wird und die durch mindestens eine Stufe der Abkühlung auf eine Temperatur auf unter 100 °C voneinander getrennt sind und an die sich eine Endbearbeitungsstufe anschließt, während der das Vulkanisationssystem durch mechanische Bearbeitung bei einer Temperatur unter 100 °C zugegeben wird.

**4.** Kautschukzusammensetzung nach Anspruch 3,
dadurch gekennzeichnet,
daß die Temperatur der beiden mechanischen Stufen im Bereich von 145 bis 165 °C liegt.

**5.** Kautschukzusammensetzung nach einem der Ansprüche 1 bis 4,
dadurch gekennzeichnet,

daß das in Lösung hergestellte Copolymer ein Butadien-Styrol-Copolymer ist, das einen Styrolgehalt von 25 bis 30 Gew.-%, einen Gehalt an Vinylverknüpfungen des Butadienanteils von 55 bis 65 %, einen Gehalt an trans-1,4-Verknüpfungen von 20 bis 25 % und eine Glasübergangstemperatur von -20 bis -30 ° C aufweist.

**6.** Kautschukzusammensetzung nach einem der Ansprüche 1 bis 5,
dadurch gekennzeichnet,
daß das in Lösung hergestellte Copolymer ein Sternpolymer ist, das mit einem Verzweigungsmittel erhalten ist, das die Gruppe

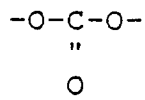

oder

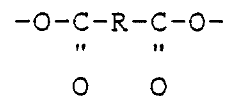

aufweist, worin R eine Kohlenwasserstoffgruppe darstellt.

**7.** Kautschukzusammensetzung nach einem der Ansprüche 1 bis 6,
dadurch gekennzeichnet,
daß sie 0 bis 70 Gewichtsteile mindestens eines weiteren Dienelastomers enthält, das unter Naturkautschuk, Polyisopren und Polybutadien ausgewählt ist.

**8.** Kautschukzusammensetzung nach Anspruch 7,
dadurch gekennzeichnet,
daß das Dienelastomer ein Polybutadien mit mehr als 90 % cis-1,4-Verknüpfungen ist.

**9.** Kautschukzusammensetzung nach einem der Ansprüche 1 bis 8,
dadurch gekennzeichnet,
daß sie ferner Ruß oder einen anderen verstärkenden Füllstoff in einer Gewichtsmenge enthält, die kleiner ist als die Menge an Siliciumdioxid.

**10.** Kautschukzusammensetzung nach einem der Ansprüche 1 bis 9,
dadurch gekennzeichnet,
daß das in Lösung hergestellte Copolymer durch am Ende der Polymerisation vorgenommene Reaktion mit einem Silan der Formel $X_n$-$(R')_m$ - $Si(OR)_3$ modifiziert ist, in der X ein Halogenatom, R Methyl oder Ethyl, n 0 oder 1, m die ganzen Zahlen 3 oder 4 und R' eine aliphatische Gruppe bedeuten.

**11.** Laufstreifen für Luftreifen,
**dadurch gekennzeichnet,**
daß er eine Kautschukzusammensetzung aufweist, die erhalten ist durch mechanische Bearbeitung

- eines Copolymers eines konjugierten Diens mit einer aromatischen Vinylverbindung, das durch Polymerisation in Lösung in einem Kohlenwasserstofflösungsmittel hergestellt ist und einen Gesamtgehalt an aromatischer Vinylverbindung von 5 bis 50 % und eine Glasübergangstemperatur (Tg) von 0 bis -80 ° C aufweist,
- mit 30 bis 150 Gewichtsteilen, auf 100 Gewichtsteile Elastomer, eines Siliciumdioxids, das eine BET-Oberfläche von 100 bis 250 $m^2/g$, eine CTAB-Oberfläche von 100 bis 250 $m^2/g$, eine gemessene Ölaufnahme von DBP von 150 bis 250 ml/100 g und eine mittlere Projektionsfläche der Aggregate von mehr als 8500 $nm^2$ vor dem Einsatz und von 7000 bis 8400 $nm^2$ im Laufstreifen aufweist,
- sowie den herkömmlicherweise eingesetzten Additiven mit Ausnahme des Vulkanisationssystems,

wobei die thermomechanische Bearbeitung mindestens eine thermische Stufe umfaßt, in der eine maximale Temperatur von 130 bis 180 ° C während einer geeigneten Dauer erreicht wird, die von der für die mechanische Bearbeitung gewählten Temperatur und von Art und Volumen der der thermomechanischen Bearbeitung unterzogenen Bestandteile abhängt und im Dereich von 10 s bis 20 min liegt, und sich daran eine Endbearbeitungsstufe anschließt, während der das Vulkanisationssystem durch mechanische Bearbeitung bei einer Temperatur unterhalb der Vulkanisationstemperatur Zugegeben wird.

**12.** Laufstreifen für Luftreifen nach Anspruch 11,
dadurch gekennzeichnet,
daß die thermomechanische Bearbeitung von einer Maximierung des Verhältnisses 300 %-Modul/ 100 %-Modul begleitet wird.

**13.** Laufstreifen für Luftreifen nach Anspruch 11 oder 12,
dadurch gekennzeichnet,
daß die thermomechanische Bearbeitung mindestens zwei Schritte umfaßt, bei denen jeweils eine Temperatur von 145 bis 165 °C erreicht wird.

**14.** Laufstreifen für Luftreifen nach einem der Ansprüche 11 bis 13,
dadurch gekennzeichnet,
daß das in Lösung hergestellte Copolymer ein Butadien-Styrol-Copolymer ist, das einen Styrolgehalt von 25 bis 30 Gew.-%, einen Gehalt an Vinylverknüpfungen des Butadienanteils von 55 bis 65 %, einen Gehalt an trans-1,4-Verknüpfungen von 20 bis 25 % und eine Glasübergangstemperatur von -20 bis -80 °C aufweist.

**15.** Laufstreifen nach einem der Ansprüche 11 bis 14,
dadurch gekennzeichnet,
daß er 0 bis 70 Gewichtsteile mindestens eines weiteren Dienelastomers enthält, das unter Naturkautschuk, Polyisopren und Polybutadien ausgewählt ist.

**16.** Laufstreifen nach einem der Ansprüche 11 bis 15,
dadurch gekennzeichnet,
daß er ferner Ruß oder einen anderen verstärkenden Füllstoff in einer Gewichtsmenge enthält, die kleiner ist als die Menge an Siliciumdioxid.

**17.** Luftreifen,
dadurch gekennzeichnet,
daß er einen mit Schwefel vulkanisierten Laufstreifen besitzt, der eine Kautschukzusammensetzung aufweist, die erhalten ist durch mechanische Bearbeitung

- eines Copolymers eines konjugierten Diens mit einer aromatischen Vinylverbindung, das durch Polymerisation in Lösung in einem Kohlenwasserstofflösungsmittel hergestellt ist und einen Gesamtgehalt an aromatischer Vinylverbindung von 5 bis 50 % und eine Glasübergangstemperatur (Tg) von 0 bis -80 °C aufweist,
- mit 30 bis 150 Gewichtsteilen, auf 100 Gewichtsteile Elastomer, eines Siliciumdioxids, das eine BET-Oberfläche von 100 bis 250 $m^2/g$, eine CTAB-Oberfläche von 100 bis 250 $m^2/g$, eine gemessene Ölaufnahme von DBP von 150 bis 250 ml/100 g und eine mittlere Projektionsfläche der Aggregate von mehr als 8500 $nm^2$ vor dem Einsatz und von 7000 bis 8400 $nm^2$ im Luftreifen aufweist,
- sowie den herkömmlicherweise eingesetzten Additiven mit Ausnahme des Vulkanisationssystems,

wobei die thermomechanische Bearbeitung mindestens eine thermische Stufe umfaßt, in der eine maximale Temperatur von 130 bis 180 °C während einer geeigneten Dauer erreicht wird, die von der für die mechanische Bearbeitung gewählten Temperatur und von Art und Volumen der der thermomechanischen Bearbeitung unterzogenen Bestandteile abhängt und im Bereich von 10 s bis 20 min liegt, und sich daran eine Endbearbeitungsstufe anschließt, während der das Vulkanisationssystem durch mechanische Bearbeitung bei einer Temperatur unterhalb der Vulkanisationstemperatur zugegeben wird.

**18.** Verfahren zur Herstellung einer mit Schwefel vulkanisierbaren Kautschukzusammensetzung auf der Basis eines Copolymers eines konjugierten Diens mit einer aromatischen Vinylverbindung, die Siliciumdioxid als Füllstoff enthält,
gekennzeichnet durch
Mischen durch mit einer entsprechenden Vorrichtung vorgenommene mechanische Bearbeitung

- eines Copolymers eines konjugierten Diens mit einer aromatischen Vinylverbindung, das durch Polymerisation in Lösung in einem Kohlenwasserstofflösungsmittel hergestellt ist und einen Gesamtgehalt an aromatischer Vinylverbindung von 5 bis 50 % und eine Glasübergangstemperatur von 0 bis -80 °C aufweist, allein oder zusammen mit einem weiteren Dienelastomer,

- mit 30 bis 150 Gewichtsteilen, auf 100 Gewichtsteile Elastomer, eines Siliciumdioxids, das eine BET-Oberfläche von 100 bis 250 $m^2/g$, eine CTAB-Oberfläche von 100 bis 250 $m^2/g$, eine Ölaufnahme an DBP von 150 bis 250 ml/100 g und eine mittlere Projektionsfläche der Aggregate von mehr als 8500 $nm^2$ vor dem Einsatz sowie gegebenenfalls einem weiteren verstärkenden Füllstoff, der gegenüber dem Siliciumdioxid in einer kleineren Gewichtsmenge vorliegt,
- sowie den herkömmlicherweise eingesetzten Additiven mit Ausnahme des Vulkanisationssystems

in der Weise, daß die mechanische Bearbeitung mindestens eine thermische Stufe umfaßt, in der eine maximale Temperatur von 130 bis 180 °C wahrend einer geeigneten Dauer erreicht wird, die von der für die mechanische Bearbeitung gewählten Temperatur und von Art und Volumen der der thermomechanischen Bearbeitung unterzogenen Bestandteile abhängt, durch welche die mittlere Projektionsfläche der Aggregate des Siliciumdioxids so verringert wird, daß sie nach dem thermomechanischen Mischen im Bereich von 7000 bis 8400 $nm^2$ liegt, wobei die Dauer im Bereich von 10 s bis 20 min liegt, und anschließend durch mechanische Endbearbeitung das Vulkanisationssystem bei einer unterhalb der Vulkanisationstemperatur liegenden Temperatur in das erhaltene Gemisch eingebracht wird.

**19.** Verfahren nach Anspruch 18,
dadurch gekennzeichnet,
daß die thermomechanische Bearbeitung von einer Maximierung des Verhältnisses 300 %-Modul/ 100 %-Modul begleitet wird.